# EUROPÄISCHE PATENTANMELDUNG

(11) **EP 1 375 392 A1**
(43) Veröffentlichungstag der Anmeldung: **02.01.2004**
(21) Anmeldenummer: 03010230.5
(22) Anmeldetag: 07.05.2003
(51) Int. Cl.: B65G 19/28

(54) **Ketten-Kratzförderer**

(30) Priorität: 19.06.2002 DE 10227490
(71) Anmelder: KNOLL MASCHINENBAU GMBH, 88348 Bad Saulgau (DE)
(72) Erfinder: Dreher, Robert, 88348 Bad Saulgau (DE)
(74) Vertreter: Patentanwälte Eisele, Otten, Roth & Dobler

(57) **Zusammenfassung**

Es wird eine Fördervorrichtung vorgeschlagen, die eine verschleißarme Förderung, insbesondere von Metallabfällen aus der Metallverarbeitung, wie Späne oder Schmelzpartikel mit geringen Kräften ermöglicht. Dies wird erfindungsgemäß mit einer Fördervorrichtung erzielt, die ein umlaufendes Kratzband mit einem Obertrum (3) und einem Untertrum (4) umfasst, wobei das Kratzband mit Kratzleiste (5, 6) versehen ist, die über einen Kratzboden (9) geführt werden. Erfindungsgemäß wird der Kratzboden (9) zwischen dem Untertrum (4) und dem Obertrum (3) angeordnet.

## Beschreibung

Die Erfindung betrifft eine Fördervorrichtung mit einem umlaufenden Kratzband nach dem Obergriff des Anspruchs 1.

Zur Materialförderung, insbesondere von Abfallprodukten bei der Metallbearbeitung wie Späne aus spanabhebenden Werkzeugmaschinen oder Schmelzpartikel bei Laserschneidvorrichtungen, werden bislang u.a. sogenannte Scharnierbandförderer eingesetzt. Die Scharnierbänder dieser handelsüblichen Scharnierbandförderer sind aus Metall gefertigt, um den mechanischen Belastungen Stand zu halten. Feine Partikel, wie sie insbesondere aus Laserschneidmaschinen als Abfallprodukt entstehen, sind jedoch in der Lage, in die Scharniere der einzelnen Bänder einzudringen und diese Scharniere zu verschleißen. Die Lebensdauer solcher Scharnierbandförderer wird dadurch deutlich reduziert.

Weiterhin sind für den Spänetransport bei metallbearbeitenden Maschinen sogenannte Kratzbandförderer bekannt, bei denen Kratzleisten außenseitig an zwei umlaufenden Ketten befestigt sind. Unterhalb des Untertrums kratzen die Kratzleisten über einen sogenannten Kratzboden, auf dem die durch das Obertrum hindurchfallenden Späne gesammelt und mit Hilfe der Kratzleisten abtransportiert werden. Nachteilig bei diesen Kratzbandförderern ist der Umstand, dass die Späne oder sonstigen Abfallpartikel mit der Förderkette in Kontakt kommen und so an dieser Stelle für einen unerwünschten Verschleiß oder Funktionsbeeinträchtigungen sorgen.

Für den Transport von Spänen über sehr große Strecken, z.B. zur Förderung von Abfällen einer Mehrzahl von Werkzeugmaschinen zu einer Sammelstelle sind weiterhin sogenannte Zugklappenförderer in Gebrauch. Bei diesen Zugklappenförderern wird eine Klappe innerhalb einer Rinne hin- und herbewegt. Dabei wird in einer Förderrichtung der Zugklappe das in der Rinne befindliche Material mitgenommen. Da sich bei dieser Art der Förderung große Materialmengen anstauen, ist ein entsprechend starker Antrieb erforderlich. Darüber hinaus ist die Steuerung für den Antrieb aufgrund des erforderlichen Vor- und Rücklaufs relativ aufwendig.

Alle oben genannten Fördervorrichtungen sind im Bereich metallbearbeitender Maschinen handelsüblich.

Aufgabe der Erfindung ist es, ausgehend von dem geschilderten Stand der Technik eine Fördervorrichtung vorzuschlagen, die eine verschleißarme Förderung mit geringen Kräften ermöglicht.

Diese Aufgabe wird von einer Vorrichtung nach dem Oberbegriff des Anspruchs 1 durch die Merkmale des kennzeichnenden Teils gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Fördervorrichtung dadurch aus, dass der Kratzboden zwischen dem Untertrumm und dem Obertrumm angeordnet ist. Auf diese Weise ist der untere Bereich des umlaufenden Kratzbandes vor dem zu fördernden Material geschützt, d.h. der Antrieb des Kratzbandes wird insgesamt weniger verschmutzt.

In einer Weiterbildung der Erfindung wird der Kratzboden wenigstens teilweise als Boden einer Rinne ausgebildet, die Seitenwände aufweist, die sich seitlich vom Kratzboden nach oben erstrecken. Diese rinnenförmige Ausbildung schützt die Antriebsvorrichtung für die Kratzleisten im Seitenbereich neben dem Kratzboden, so dass auch an dieser Stelle eine Verschmutzung und der damit verbundene Verschleiß reduziert oder ganz vermieden wird.

Durch die Ausbildung einer Rinne mit Kratzboden ergeben sich darüber hinaus weitere Anwendungsmöglichkeiten einer erfindungsgemäßen Fördervorrichtung. So können beispielsweise fließ- oder rieselfähige Materialien mit einem solchen Kratzbandförderer transportiert werden, da aufgrund der Seitenwände der Rinne ein seitliches Abfließen oder Herabrieseln nicht mehr möglich ist. In Frage kommt beispielsweise der Transport von Schlämmen. Im Bereich von Werkzeugmaschinen ist es somit z.B. möglich, bei Bedarf die Abfallstoffe zusammen mit wenigstens einem Teil des anfallenden Kühlschmiermittels zu fördern und einer von der Werkzeugmaschine beabstandeten Trenn- oder Aufbereitungsvorrichtung zuzuführen.

Die Kratzleisten werden bei einer solchen Ausbildung des Kratzbodens als Bestandteil einer Rinne vorteilhafterweise außerhalb der Rinne mit der entsprechenden Antriebsvorrichtung verbunden. Auf diese Weise ist die Antriebsvorrichtung vor dem zu transportierenden Material geschützt, da sie in keiner Weise mit den in der Rinne befindlichen zu fördernden Materialien in Verbindung kommen kann.

Weiterhin ist es von Vorteil, die Rinne mit einem oberen Seitensteg zu versehen, der wenigstens teilweise oberhalb der Antriebsvorrichtung angeordnet ist. Auf diese Weise wird die Antriebsvorrichtung auch von der Oberseite her gegen einen Kontakt mit dem zu fördernden, möglicherweise von oben in die Rinne fallenden oder zugeführten Material geschützt. Hierdurch kann die Antriebsvorrichtung noch weniger verschmutzen, wodurch wiederum der Verschleiß reduziert und die Lebensdauer der Vorrichtung erhöht wird.

Vorzugsweise wird weiterhin eine Abdeckung vorgesehen, die sich oberhalb der Kratzleisten nach innen erstreckt. Einerseits kann eine solche Abdeckung als Führung für anfallendes, zu förderndes Material ausgebildet werden, zum anderen wird hierdurch der Schutz bzw. die Abtrennung der Antriebsvorrichtung gegenüber einem solchen, von oben einfallenden Material weiter verbessert. Die erfindungsgemäßen Vorteile, d.h. eine lange Lebensdauer durch geringen Verschleiß wird durch die hierdurch nochmals verbesserte Abschottung der Antriebsvorrichtung gegenüber dem zu fördernden Material weiter verbessert.

In einer besonderen Ausführungsform dieser Weiterbildung wird zudem ein Überlapp zwischen dem die Antriebsvorrichtung wenigstens teilweise abdeckenden Seitensteg der Rinne mit Kratzboden und der oberen Abdeckung vorgesehen. Ein solcher Überlapp gewährleistet, dass die Antriebsvorrichtung nahezu völlig unzugänglich gegenüber dem von oben einfallenden, abzutransportierenden Materials ist. Ein durch solches Material verursachter Verschleiß ist somit nahezu vollständig unterbunden.

In einer Weiterbildung dieser Ausführungsform wird die obere Abdeckung wenigstens teilweise zum Kratzboden hin geneigt. Auf diese Weise dient die Abdeckung zugleich als Führungselement um von oben einfallendes Material nach innen in den Bereich der Förderrinne mit Kratzboden zu leiten.

Die Kratzleisten werden vorzugsweise außerhalb der Förderrinne mit der Antriebsvorrichtung verbunden, wobei die Kratzleisten hierbei so ausgebildet werden, dass sie wenigstens teilweise die Antriebsvorrichtung umgreifen.

Auf diese Weise kann die Aufwendung der Kratzleisten seitlich tiefer angeordnet werden, wodurch sich günstigere Kräfteverhältnisse und insbesondere ein kleineres Kippmoment im Bereich der Kratzleistenbefestigung ergeben.

Dementsprechend wird die Kratzleiste bevorzugt mit einem seitlichen Befestigungselement versehen, das sich in den Bereich unterhalb des Seitenstegs der Förderrinne erstreckt. In diesem Bereich ist eine Befestigung mit geringem oder ohne Kippmoment der Kratzleiste an der Antriebsvorrichtung möglich.

Die Antriebsvorrichtung kann hierbei wie bei bekannten Kratzbodenförderern eine Kette zur Befestigung der Kratzleiste umfassen. Auch andere Antriebe z.B. ein Riemenoder Seilantrieb wäre an dieser Stelle denkbar.

In einer Weiterbildung der Erfindung werden die Kratzleisten beweglich mit der Antriebsvorrichtung verbunden. Dies ermöglicht es den Kratzleisten, bei entsprechendem Widerstand durch das zu fördernde Material oder Unebenheiten auszuweichen.

Die Kratzleisten können hierbei drehbar und/oder verschiebbar ausgebildet werden. Gegebenenfalls sind hierbei entsprechende Rückstellelemente vorzusehen, so dass die Kratzleiste wieder in die zur Förderung vorgesehene Position zurückgebracht wird.

Eine bewegliche Ausführung wird vorzugsweise vertikal oder zumindest mit einer vertikalen Komponente der Bewegungsrichtung beweglich ausgebildet, was den Vorteil mit sich bringt, dass die Schwerkraft als Rückstellkraft für die Kratzleiste bei der Ausweichbewegung nutzbar ist.

Darüber hinaus kann bei einer vertikal verschiebbaren Variante die Befestigung mit der Antriebsvorrichtung einfacher, z.B. mit einer Langlochführung, bewerkstelligt werden.

In einer weiteren vorteilhaften Ausführungsform der Erfindung werden die Kratzleisten schräg zum Kratzboden hingeneigt angeordnet. Je nach Art des zu fördernden Materials kann die fördernde Wirkung durch eine Neigung nach vorn positiv beeinflusst oder aber das Ausweichen bei Unebenheiten oder Hindernissen durch eine Neigung nach hinten erleichtert werden.

In einer besonders vorteilhaften Ausführungsform der Erfindung wird die Förderrinne mit dem Kratzboden als separate austauschbare Einheit vorgesehen. Dies ist insbesondere im Bereich der Abfallförderung von metallbearbeitenden Maschinen von Vorteil, da hierbei scharfkantige Artikel über den Kratzboden gefördert werden, was auch am Kratzboden entsprechende Spuren hinterlässt. Je nach Füllstand der Förderrinne können solche Kratzspuren auch im Bereich der Seitenwände der Förderrinne auftreten. Eine solchermaßen einem Verschleiß unterliegenden Förderrinne kann kostengünstig ersetzt werden, sofern sie als separate Einheit austauschbar ausgebildet ist.

In einer anderen Ausführungsform der Erfindung wird die Rinne mit einem austauschbaren Bodenbelag versehen. Auch dies ist eine Möglichkeit, um die durch nicht zu unterbindenden Verschleiß entstehenden Kosten zu reduzieren, da in diesem Fall lediglich der Bodenbelag entnommen und ausgetauscht werden muss. Darüber hinaus bietet diese Variante die Möglichkeit, den Bodenbelag des Kratzbodens an das jeweils zu fördernde Material anzupassen und so einen geringstmöglichen Verschleiß zu erzielen.

In einer Weiterbildung der Erfindung werden die Kratzleisten mit einem austauschbaren Kratzelement versehen, die im Bereich des höchsten Verschleißes, d.h. im Bereich des Kratzbodens angebracht sind. Auch hierdurch können gegebenenfalls die durch Verschleiß verursachten Kosten reduziert werden, indem lediglich die Kratzelemente an den Kratzleisten ausgetauscht werden. Darüber hinaus können durch solche Kratzelemente die Kratzleisten wiederum an das zu fördernde Material bzw. dem jeweiligen Einsatzzweck angepasst werden.

Eine Förderrinne für einen Kratzbandförderer der beschriebenen Art lässt sich in einer besonderen Ausführungsform gemeinsam mit den oberen, sich teilweise über die Antriebsvorrichtung erstreckenden Seitenstegen auf kostengünstige Weise aus einem Blech biegen.

Ein Ausführungsbeispiel der Erfindung ist in der Zeichnung dargestellt und wird anhand der Figuren nachfolgend näher erläutert.

Im Einzelnen zeigen
- Fig. 1: eine schematische Seitenansicht eines erfindungsgemäßen Kratzbandförderers und
- Fig. 2: eine Schnittdarstellung entlang der Schnittlinie II in Fig. 1.

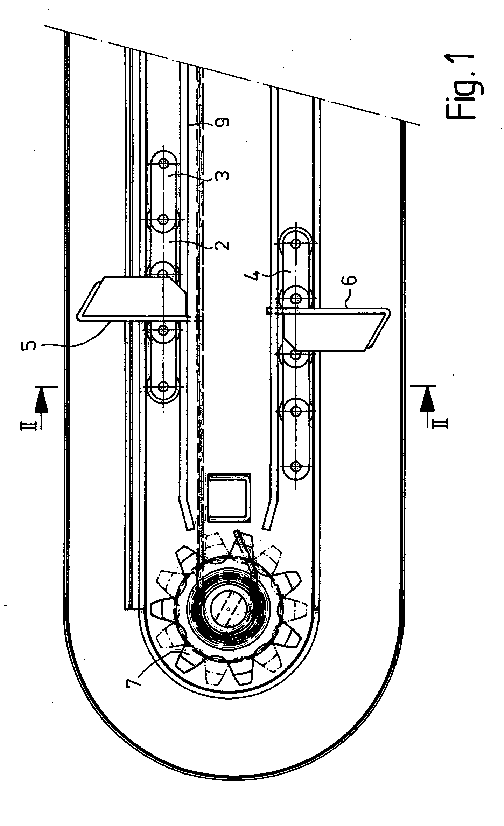

Der Kratzbandförderer 1 gemäß Fig. 1 umfasst zwei Förderketten, von denen in den Figuren eine Förderkette 2 dargestellt ist. Sowohl im Bereicht des Obertrums 3 als auch im Bereich des Untertrums 4 ist jeweils eine Kratzleiste 5, 6 dargestellt. Eine Vielzahl solcher Kratzleisten 5 ,6 sind entlang der Förderkette 2 angeordnet, jedoch nicht in den Figuren eingezeichnet. Die Förderkette 2 wird über Kettenräder 7 umgelenkt und angetrieben.

Eine Förderrinne 8, die den Kratzboden 9 umfasst, ist so angeordnet, dass sich der Kratzboden 9 zwischen dem Obertrum 3 und dem Untertrum 4 befindet. Die Seitenwände 10 erstrecken sich entlang einem Führungselement 11, das zur Führung der Förderkette 2 dient nach oben und enden in einem Seitensteg 12 der sich über das Führungselement 11 und teilweise über die Förderkette 2 erstreckt.

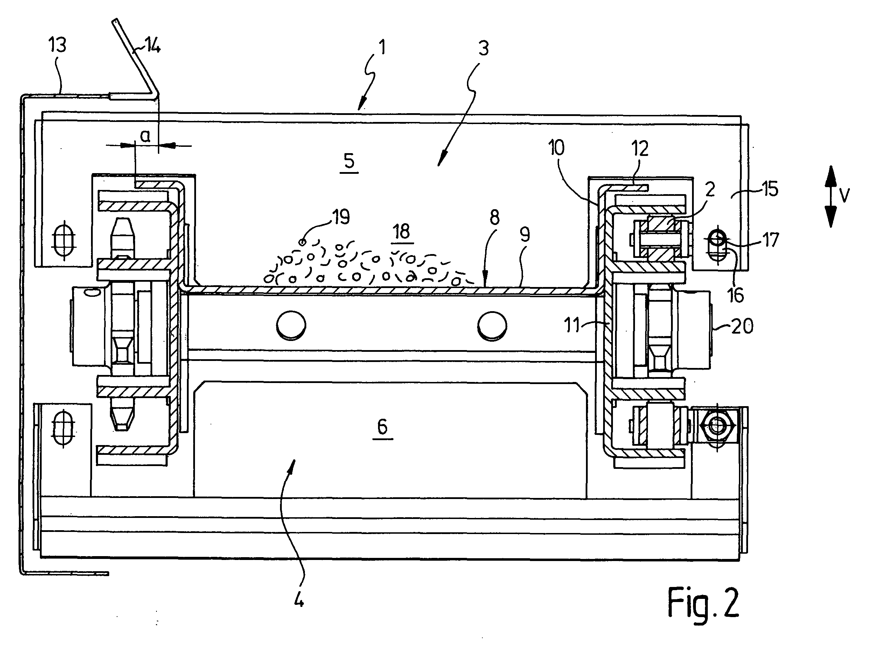

Eine Abdeckung 13 ist seitlich neben dem Kratzbandförderer 1 angebracht und erstreckt sich an der Oberseite soweit zur Mitte hin, dass sich ein Überlapp a mit dem Seitensteg 12 ergibt. Die dargestellte Abdeckung 13 ist weiterhin mit einer Führungsschräge 14 versehen, die in Fig. 2 nur teilweise dargestellt ist. Die Führungsschräge 14 kann dann eingesetzt werden, wenn die Bauhöhe des Kratzbandförderers 1 unkritisch ist und eine Führung für von oben einfallendes Material in Richtung auf die Förderrinne 8 gewünscht wird.

Die Abdeckung 13 kann in gleicher Weise auch auf der gegenüberliegenden Seite angebracht werden.

Die Kratzleisten 5, 6 sind mit einer Fallleiste 15 als Befestigungselement versehen, so dass sie sowohl die Seitenwand 10 der Förderrinne 8, als auch die Förderkette 2 umgreifen. Sie sind außenseitig mit Hilfe einer Langlochführung 16 an der Förderkette 2 befestigt. Die Langlochführung 16, die von einem Fixierbolzen 17 durchsetzt ist, erlaubt die Verschiebung der Kratzleisten 5 in vertikaler Richtung (siehe Doppelpfeil V).

In dem durch die Förderrinne 8 gebildeten Innenraum 18 befindet sich das zu fördernde Material 19, das über die Kratzleisten 5, 6 bei umlaufender Förderkette 2 in der gewünschten Richtung gefördert wird.

Das Untertrum 4 ist hierbei bereits durch die Anordnung des Kratzbodens 9 zwischen dem Obertrum 3 und dem Untertrum 4 vor herabfallendem Material 19 geschützt. Bereits durch diese Maßnahme wird die Verschmutzung der Antriebsvorrichtung, d.h. der Förderkette 2 sowie aller damit in Berührung kommenden Antriebskomponenten, wie beispielsweise die Kettenräder 7 und deren Antriebsachsen 20, deutlich reduziert.

Durch die Ausbildung einer Förderrinne 8 mit Kratzboden 9 wird auch im Bereich des Obertrums 3 eine Verschmutzung dieser Antriebselemente verhindert. Dieser Effekt wird durch die Seitenstege 12 in Verbindung mit der Abdeckung 13 nochmals verbessert. Die Befestigungselemente 16 der Kratzleisten 5, 6 sind außerhalb jeden Kontakts mit zu förderndem Material 19 angeordnet, so dass auch über diese Befestigungselemente 15, 17 keine Verschmutzung in den Bereich der Antriebsvorrichtung hereingetragen werden kann.

Die tiefe Anordnung der Befestigung der Kratzleisten 5 im Bereich der Langlochführungen 16 seitlich neben der Förderkette 2 bieten sehr günstige Kräfteverhältnisse für die Förderung. Insbesondere wird das Kippmoment der Kratzleisten 5, das durch Wegschieben von zu förderndem Material 19 auftreten kann, durch diese seitliche, tief angeordnete Befestigung reduziert.

Die Langlochführung 16 erlaubt dabei ohne Weiteres ein Ausweichen des Kratzbodens 5 nach oben in vertikaler Richtung, sofern dies durch Unebenheiten oder festsitzendes Material 19 erforderlich wird. Alle diese genannten Maßnahmen verbessern die Verschleißfestigkeit des Kratzbandförderers 1.

Darüber hinaus kann die Förderrinne 8 als Einzelteil ausgetauscht werden. Die Betriebskosten, die durch den nicht zu vermeidenden Verschleiß aufgrund des rutschenden Transports des zu fördernden Materials 19 auf den Kratzboden 9 verursacht werden, werden hierdurch weiter reduziert.

Als Nebeneffekt ergeben sich durch die Förderrinne 8 bei einem erfindungsgemäßen Kratzbandförderer 1 weitere Vorteile: So wird die Förderkapazität größer, da die Rinne gefüllt werden kann, ohne dass Material 19 seitlich herabfallen oder in den Bereich der Förderkette 2 gelangen kann.

Darüber hinaus können, wie bereits eingangs erwähnt fließund/oder rieselfähige Materialien, insbesondere Schlämme oder breiartige Materialgemische befördert werden. Auch chemisch aggressivere Materialien können mit Hilfe eines solchen Förderers transportiert werden, sofern die Förderrinne 8 ein entsprechend resistentes Material wenigstens auf der Innenseite aufweist.

### Bezugszeichenliste:

- 1: Kratzbandförderer
- 2: Förderkette
- 3: Obertrum
- 4: Untertrum
- 5: Kratzleiste
- 6: Kratzleiste
- 7: Kettenräder
- 8: Förderrinne
- 9: Kratzboden
- 10: Seitenwand
- 11: Führungselement
- 12: Seitensteg
- 13: Abdeckung
- 14: Führungsschräge
- 15: Fallleiste
- 16: Langlochführung
- 17: Fixierbolzen
- 18: Innenraum
- 19: Material

## Patentansprüche

1. Fördervorrichtung mit einem umlaufenden Kratzband, das ein Obertrum und ein Untertrum aufweist, wobei das Kratzband mit Kratzleisten versehen ist, die über einen Kratzboden geführt sind, **dadurch gekennzeichnet, dass** der Kratzboden (9) zwischen dem Untertrum (4) und dem Obertrum (3) angeordnet ist.

2. Vorrichtung nach Anspruch 1 **dadurch gekennzeichnet, dass** eine Förderrinne (8) vorgesehen ist die wenigstens teilweise den Kratzboden (9) umfasst und die Seitenwände (10) aufweist, die sich vom Kratzboden (9) nach oben erstrecken.

3. Vorrichtung nach einem der vorgenannten Ansprüche **dadurch gekennzeichnet, dass** die Kratzleisten (5, 6) außerhalb der den Kratzboden (9) umfassenden Förderrinne (8) mit einer Antriebsvorrichtung (2) verbunden sind.

4. Vorrichtung nach einem der vorgenannten Ansprüche **dadurch gekennzeichnet, dass** die Befestigung der Kratzleisten mit der Antriebsvorrichtung (2) seitlich neben der Förderrinne (8) vorgesehen ist.

5. Vorrichtung nach einem der vorgenannten Ansprüche **dadurch gekennzeichnet, dass** die Förderrinne (2) mit einem Seitensteg (12) versehen ist, der wenigstens teilweise oberhalb der Antriebsvorrichtung (2) angeordnet ist.

6. Vorrichtung nach einem der vorgenannten Ansprüche **dadurch gekennzeichnet, dass** eine Abdeckung (13) vorgesehen ist, die sich oberhalb der Kratzleisten (5) nach innen erstreckt.

7. Vorrichtung nach einem der vorgenannten Ansprüche **dadurch gekennzeichnet, dass** ein Überlapp (a) zwischen dem Seitensteg (12) der Förderrinne (2) und der Abdeckung (13) vorgesehen ist.

8. Vorrichtung nach einem der vorgenannten Ansprüche **dadurch gekennzeichnet, dass** die Abdeckung (14) wenigstens teilweise zum Kratzboden (9) hingeneigt ist.

9. Vorrichtung nach einem der vorgenannten Ansprüche **dadurch gekennzeichnet, dass** die Kratzleisten (5, 6) ein Befestigungselement (15) aufweisen, das die Antriebsvorrichtung (2) wenigstens teilweise übergreift.

10. Vorrichtung nach einem der vorgenannten Ansprüche **dadurch gekennzeichnet, dass** die Kratzleisten (5, 6) mit ihrem Befestigungselement (15) unterhalb des Seitenstegs (12) an der Antriebsvorrichtung (2) befestigt sind.

11. Vorrichtung nach einem der vorgenannten Ansprüche **dadurch gekennzeichnet, dass** die Antriebsvorrichtung eine Förderkette (2) umfasst.

12. Vorrichtung nach einem der vorgenannten Ansprüche **dadurch gekennzeichnet, dass** die Kratzleisten (5, 6) beweglich mit der Antriebsvorrichtung (2) verbunden sind.

13. Vorrichtung nach einem der vorgenannten Ansprüche **dadurch gekennzeichnet, dass** die Kratzleisten (5) vertikal verschiebbar mit der Antriebsvorrichtung (2) verbunden sind.

14. Vorrichtung nach einem der vorgenannten Ansprüche **dadurch gekennzeichnet, dass** die Kratzleisten schräg zum Kratzboden (9) geneigt angeordnet sind.

15. Vorrichtung nach einem der vorgenannten Ansprüche **dadurch gekennzeichnet, dass** die Förderrinne (2) mit dem Kratzboden (9) als separate austauschbare Einheit ausgebildet ist.

16. Vorrichtung nach einem der vorgenannten Ansprüche **dadurch gekennzeichnet, dass** die Förderrinne (2) mit einem austauschbaren Bodenbelag versehen ist.

17. Vorrichtung nach einem der vorgenannten Ansprüche **dadurch gekennzeichnet, dass** die Kratzleisten ein austauschbares Kratzelement aufweisen.

18. Vorrichtung nach einem der vorgenannten Ansprüche **dadurch gekennzeichnet, dass** die Förderrinne (2) aus einem gebogenen Flachmaterial, insbesondere einem Metallblech besteht.
